# FASCICULE DE BREVET EUROPEEN

(11) **EP 1 105 351 B1**
(45) Date de publication et mention de la délivrance du brevet: **27.11.2002**
(21) Numéro de dépôt: 99932928.7
(22) Date de dépôt: 21.07.1999
(51) Int. Cl.: C02F 1/44, B01D 61/18, B01D 65/02, B01D 65/10

(54) **PROCEDE ET DISPOSITIF DE FILTRATION D'EAU PAR MEMBRANE**
VERFAHREN UND VORRICHTUNG ZUR MEMBRANFILTRATION VON WASSER
METHOD AND DEVICE FOR MEMBRANE FILTERING OF WATER

(30) Priorité: 28.07.1998 FR 9809609; 08.02.1999 FR 9901674
(43) Date de publication de la demande: 13.06.2001
(73) Titulaire: S.A. Polymem, 31450 Fourquevaux (FR)
(72) Inventeur: ESPENAN, Jean-Michel, F-31450 Deyme (FR); SAUX, Franc, F-31570 Sainte Foy d'Aygrefeuille (FR)
(74) Mandataire: Rinuy, Santarelli
(86) Numéro de dépôt international: FR9901781
(87) Numéro de publication internationale: WO00006500

(56) Documents cités:
- EP-A- 0 655 418
- DE-U- 29 620 426
- US-A- 5 248 424
- PATENT ABSTRACTS OF JAPAN vol. 096, no. 008, 30 août 1996 (1996-08-30) & JP 08 089960 A (KUBOTA CORP), 9 avril 1996 (1996-04-09) cité dans la demande
- PATENT ABSTRACTS OF JAPAN vol. 012, no. 155 (C-494), 12 mai 1988 (1988-05-12) -& JP 62 269708 A (KURITA WATER IND LTD), 24 novembre 1987 (1987-11-24) cité dans la demande
- PATENT ABSTRACTS OF JAPAN vol. 098, no. 004, 31 mars 1998 (1998-03-31) & JP 09 308882 A (KUBOTA CORP), 2 décembre 1997 (1997-12-02)
- PATENT ABSTRACTS OF JAPAN vol. 018, no. 061 (C-1160), 2 février 1994 (1994-02-02) & JP 05 277346 A (KUBOTA CORP), 26 octobre 1993 (1993-10-26)

## Description

Le procédé objet de la présente invention est du domaine des procédés de production d'eau potable pour collectivités. Il concerne plus particulièrement le domaine des procédés de filtration par membrane, de type ultrafiltration.

On connaît de façon classique, des dispositifs d'épuration d'eau à base de lit de sable sur lequel est ajoutée de l'eau brute. L'eau traverse le lit de sable et est récupérée sous le sable débarrassée d'un grand nombre de particules, polluants etc. Ces dispositifs sont connus depuis de très nombreuses années et sont particulièrement répandus dans certains pays pour le nettoyage d'eau usée urbaines. On peut citer en particulier les USA ou les Pays-Bas.

La plupart de ces dispositifs, datant de plusieurs décennies voire plus d'un siècle, doivent aujourd'hui être remplacés par des systèmes plus performants. Ils ne permettent en effet pas tous d'atteindre un eau conforme aux normes actuelles de qualité en sortie d'épurateur.

Une solution classiquement proposée consiste à détruire les installations existantes et à les remplacer complètement par une construction neuve adaptée à un procédé d'épuration d'eau de type différent, que ce soit par ultrafiltration ou autre. Il est clair que ce remplacement coûte très cher aux collectivités, autant en coût de construction d'unité neuve que de destruction des unités précédemment existantes.

On connaît également dans l'art antérieur des dispositifs utilisant la hauteur d'eau au dessus de membranes pour créer une différence de pression suffisante à la filtration. Parmi ces documents, un dispositif KURITA décrit dans l'abrégé de brevet japonais Vol. 012 no 155, 12/5/88 utilise effectivement la hauteur d'eau comme générateur de pression, mais dans un dispositif très complexe, partiellement mobile en rotation, avec des superpositions de fibres longues disposées horizontalement et empotées à leurs deux bouts.
Un autre document (KUBOTA, abrégé de brevet japonais Vol. 96 no 008, 30/8/96) concerne un dispositif de traitement d'eaux usées par membranes placées verticalement, l'empotage étant réalisé par le eau, l'eau filtré étant récupérée en partie haute, avec une nécessité de hauteur d'eau importante dans la cuve.
Ce dispositif nécessite une injection d'air entre les membranes pour permettre un bon fonctionnement, en remuant l'eau usée autour des membranes.
Dans encore un autre document (PREUSSAG, demande de brevet DE 296 20 426 U), les fibres sont disposées horizontalement, et empotées à leurs deux bouts, une pompe à vide étant utilisée pour créer une différence de pression avec la cuve d'eau usée. Un flux d'air est nécessaire pour remuer les effluents. La récupération de l'eau filtrée se fait en partie haute du groupe de membranes, ce qui augmente la hauteur d'eau nécessaire pour le traitement.
Ces différents dispositifs sont complexes, et ne peuvent pas aisément être installés dans des installations existantes de traitement d'eau à lit de sable.

La présente invention entend donc remédier à ces inconvénients en proposant un nouveau procédé d'épuration d'eau par filtration.
L'invention a également pour objectif de proposer un procédé de réhabilitation d'épurateur à lit de sable, économique et rapide à mettre en oeuvre.
Selon un autre objectif de l'invention, l'unité réhabilitée réutilise autant que possible un grand nombre d'éléments des unités préexistantes, et en particulier les canalisations et dispositifs de séparation entre boues et eaux propres récupérées.
Selon encore un autre objectif de l'invention, ce procédé tire avantage de certaines dispositions spécifiques des épurateur à silo de sable pour simplifier la régulation du nouvel épurateur, produisant ainsi une simplification de fonctionnement, et donc une économie de main d'oeuvre, de matériel de régulation et de maintenance.
Le procédé selon l'invention est donc un procédé de filtration d'eau par membranes immergées, de type membranes d'ultrafiltration, la filtration à travers les membranes étant réalisée en utilisant comme source de pression différentielle la hauteur d'eau présente dans le bassin dans lequel les membranes sont immergées et sont de type fibre à peau externe, à empotage au point bas desdites membranes, caractérisé en ce que les membranes sont disposées dans des conteneurs cylindriques

On comprend que cette disposition, de type "plancher filtrant", permet une régulation simple et efficace de la pression de filtration, que ne permettent pas les dispositifs à base de pompes. La situation est ici de fonctionnement à pression constante et débit variable, au contraire des dispositifs existants, qui fonctionnent à pression variable et débit constant.
L'invention vise également le procédé de réhabilitation d'une unité existante d'épuration d'eau de type dit à bassin à sable, comprenant un bassin doté d'un plancher bas, d'un plancher intermédiaire sur lequel repose le lit de sable, d'une amenée d'eau brute, d'une tranchée haute d'évacuation des boues de lavage, caractérisé en ce qu'il comprend des étapes de suppression du lit de sable, de destruction du plancher intermédiaire, d'installation sur le plancher bas d'une série de blocs d'ultrafiltration à membrane, les membranes étant disposées dans des conteneurs et la pression de fonctionnement de ces membranes étant créée par la hauteur d'eau usée stockée dans le bassin au dessus de ces membranes.
L'invention vise également une installation de filtration d'eau par membranes, comportant une entrée d'eau brute, une connexion à un égout, un moyen de sortie d'eau produite, les membranes étant immergées dans un volume de filtration empli d'eau à filtrer, dont la hauteur d'eau au dessus desdites membranes est adaptée à créer une pression différentielle suffisante à provoquer la filtration à travers ces membranes, dans lequel les membranes sont de type fibre à peau externe sensiblement disposée en "U", dont les deux extrémités ouvertes sont situées en bas, l'empotage étant réalisé au point bas desdites membranes, caractérisée en ce que les membranes sont disposées dans des conteneurs cylindriques.
La description et les dessins qui suivent permettront de mieux comprendre les buts et avantages de l'invention. Il est clair que cette description est donnée à titre d'exemple, et n'a pas de caractère limitatif. Dans les dessins :
- la figure 1 montre schématiquement une installation de filtration d'eau selon l'invention, en vue de côté ;
- la figure 2 montre la même installation et en vue de dessus ;
- la figure 3 est une vue détaillée d'un module de filtration et de son dispositif d'amenée d'eau et de rétrolavage ;
- la figure 4 est une représentation schématique du fonctionnement de l'installation.
- la figure 5 illustre en vue en coupe une variante de dispositif à plancher filtrant,
- la figure 6 montre la même installation en vue de dessus,
- la figure 7 est une vue de détail de cette variante ;
- La figure 8 illustre une variante d'installation de filtration d'eau, en vue de côté ;
- La figure 9 illustre la même installation, en vue de dessus.

Il est à noter préliminairement que la description se rapporte à une unité de purification d'eau créée en réfection d'une unité à lit de sable préexistante. Cependant, cette description n'est nullement limitative, et le dispositif selon l'invention, ainsi que le procédé de purification d'eau, peuvent être mis en place dans une installation totalement neuve.

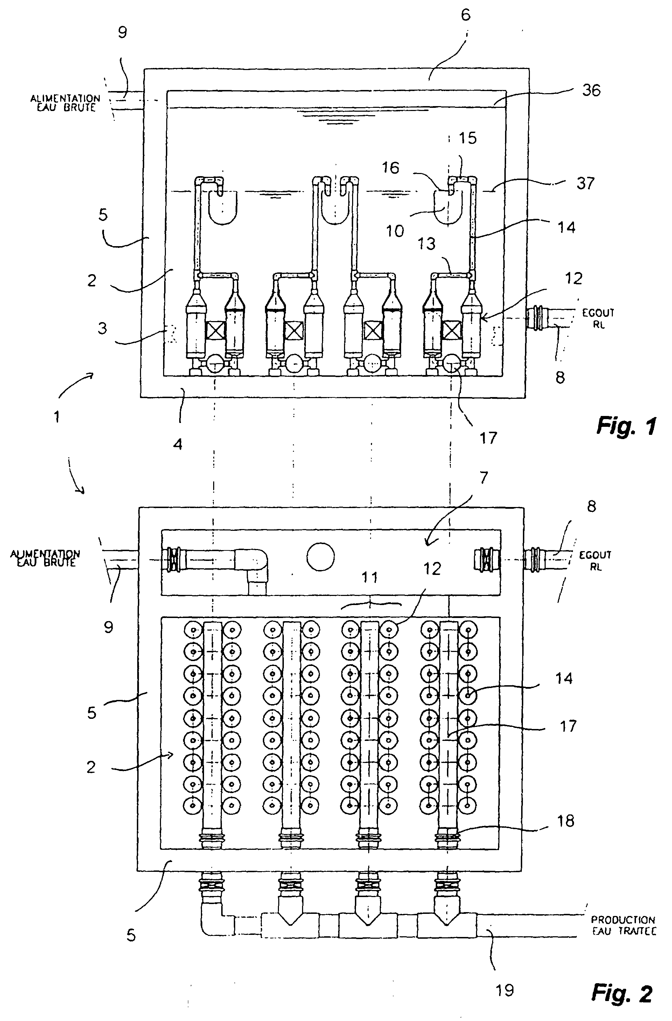

Les figures 1 et 2 illustrent schématiquement un filtre à sable 1 de type conventionnel, dans lequel le lit de sable (non représenté) a été retiré, ainsi que le plancher intermédiaire (situé précédemment au niveau noté 3 sur la figure) sur lequel ce lit de sable reposait. Dans l'exemple illustré, le filtre à sable considéré était de capacité de traitement d'eaux usées de 7600 m3 par jour, ce qui correspond à une capacité de traitement classique dans le domaine.

Comme on le voit sur les figures 1 et 2, le dispositif comporte un bassin 2 de filtration sensiblement parallélépipédique, comportant un plancher bas 4, des parois latérales 5, et un plafond 6. Une pièce latérale 7 comporte les points de connexion à l'égout 8 et à l'eau brute 9.
Dans l'exemple envisagé ici, les dimensions du bassin 2 de filtration sont d'environ 30 m2 au niveau du plancher bas 4, et de six mètres de hauteur sous plafond, ce qui détermine une pression maximale d'eau susceptible d'être créée dans ce bassin 2 de filtration de 0,6 bar. Ces dimensions conditionnent en particulier le dimensionnement des parois, des évacuations etc. Cette infrastructure est de type connu de l'homme de l'art, et n'est donc pas détaillée plus avant ici.

Dans le bassin 2 de filtration ont été installées des goulottes 10 d'évacuation des boues de lavage des membranes, situées approximativement à mi-hauteur du bassin 2 de filtration, et normalement immergées dans l'eau usée (également appelée eau brute) pendant la phase de filtration, comme on le verra plus loin. Ces goulottes 10 sont réalisées en matériau classique et sont reliées à l'égout par l'intermédiaire du point de connexion 8.

Sur le plancher 4 du bassin 2 de filtration sont disposés quatre groupes 11 comprenant chacun vingt modules de filtration 12. Les modules de filtration 12 sont disposés en huit lignes parallèles de dix modules 12 (deux lignes par groupe 11) régulièrement réparties sur le plancher 4 du bassin 2 de filtration.
Les modules de membranes 12 sont reliés deux à deux par des tuyaux de connexion 13, et sont alimentés en eau brute par des tuyaux d'alimentation 14, dont la partie supérieure forme un coude 15, de sorte que l'extrémité de chaque tuyau 16 est orientée vers le bas et située au dessus d'une goulotte 10 d'évacuation des boues de lavage des membranes.

On comprend que par cette disposition on peut soit admettre de l'eau brute dans les modules de filtration 12, lorsque le niveau d'eau est au dessus de la partie supérieure des tuyaux 14, soit évacuer des boues de lavage de membranes vers les goulottes 10 et l'égout, lorsqu'on fonctionne en rétrolavage, avec un passage d'eau dans les membranes en sens inverse de la production normale.

Les modules de membranes 12 sont donc alimentés en eau brute par leur partie haute, située à environ 1,2 mètre au dessus du plancher 4 du bassin 2 de filtration. L'eau issue de la filtration est évacuée par la partie basse des membranes, située à environ 40 cm au dessus du plancher bas 4 du bassin 2 de filtration
Les eaux filtrées sont collectées pour chaque groupe 11 par un tuyau collecteur 17, sensiblement horizontal, et qui traverse la paroi latérale 5 du bassin 2 de filtration au niveau d'un joint 18. Un collecteur de grand diamètre 19 relie les tuyaux collecteurs 17.

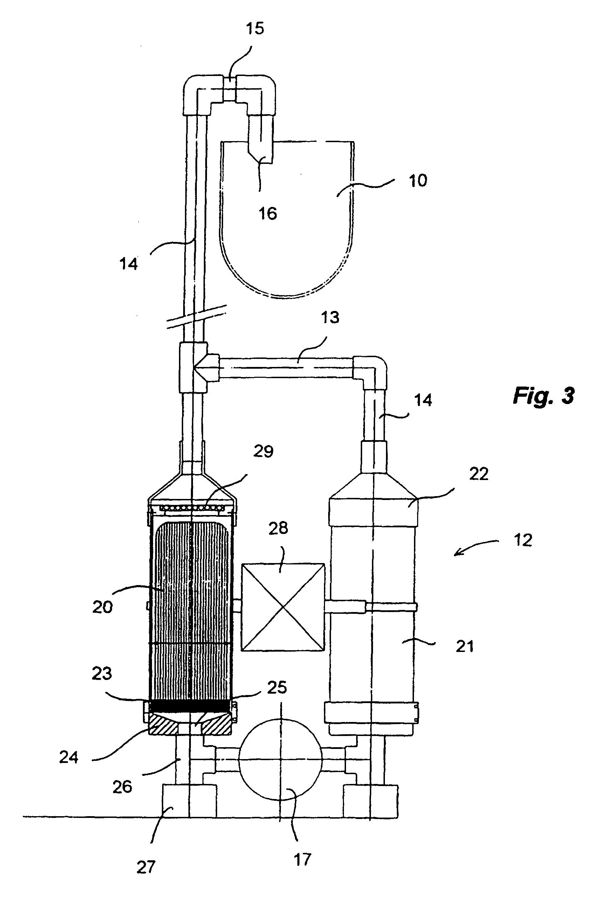

La figure 3 montre plus en détails la constitution des modules de membranes 12 de chaque groupe 11. Chaque module 12 est du type dit "fibre à peau externe", l'empotage du module étant situé au bas du module. Les modules, dont le type général est connu de l'homme du métier, ont dans l'exemple décrit ici un diamètre de 30 cm pour une hauteur de 80 cm, et une surface de membrane de filtration par module de 125 m2.
On note bien qu'il s'agit ici de membranes formant sensiblement un "U", c'est à dire en quelque sorte pliées en deux, de telle manière que leurs deux bouts peuvent être empotés en un même point, en bas dans le cas présent.
Cette disposition est particulièrement favorable à une utilisation dans des bassins de hauteur assez faible, la pression d'eau n'étant alors suffisante qu'en bas de bassin.
Un avantage complémentaire de cette disposition est la simplification de montage et de démontage des membranes, par comparaisons avec les dispositifs dans lesquels les membranes sont empotés à leurs deux extrémités longitudinales (aux points les plus éloignés possible en fait), et qui impliquent un démontage plus complexe que dans l'invention présente.
Cette disposition de membranes en "U" explique également l'allure courte et grosse des modules utilisés ici.

Comme on le voit sur la figure 3, chaque module comporte, autour des fibres creuses 20 qui effectuent la filtration effective lorsque la pression d'eau est suffisante, un conteneur cylindrique 21 terminé en partie haute par un tronc de cône 22 qui vient se relier au tuyau d'alimentation 14 en eau brute. En partie basse de module, les fibres 20 sont attachées sur un support 23, de manière que leur partie centrale creuse qui récupère l'eau filtrée, puisse se déverser sous ce support 23. Chaque conteneur cylindrique 21 comporte un fond 24, présentant un alésage 25 destiné à permettre la collection de l'eau filtrée dans un tuyau 26 relié à l'un des tuyaux collecteurs 17. Les modules 12 sont disposés sur des supports mécaniques 27 de type courant, placés sur le plancher bas 4 du bassin 2 de filtration. Des structures mécaniques 28 situées, pour chaque groupe 11, à mi-hauteur des modules 12, permettent de les solidariser ensemble.

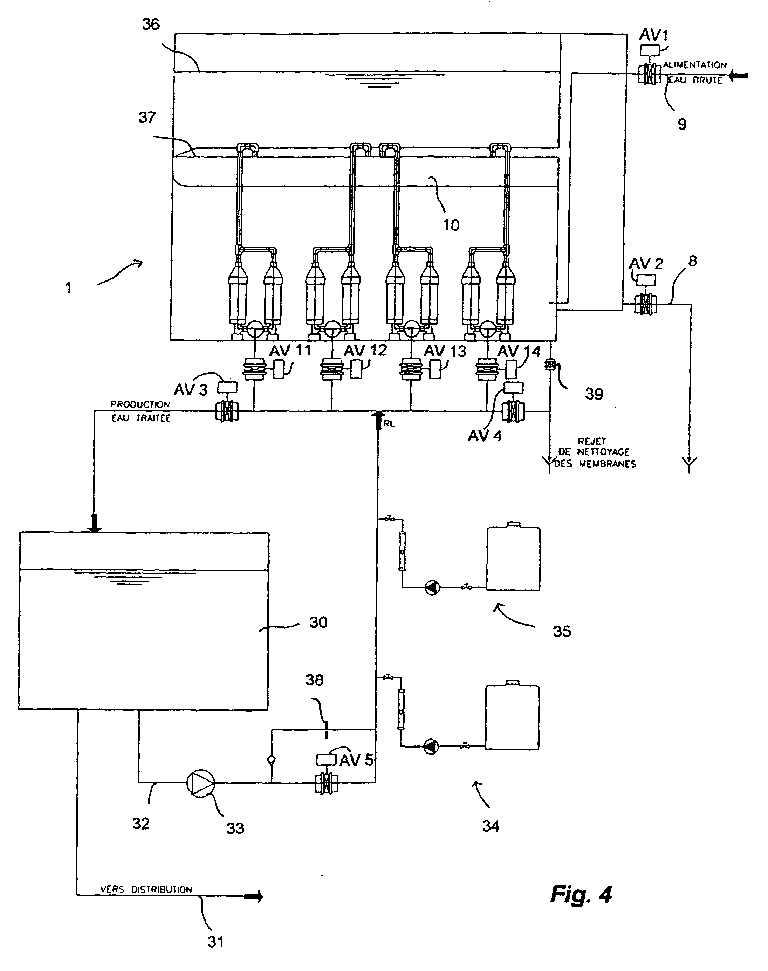

La figure 4 montre le diagramme de connexion entre les différents éléments de l'unité de filtration, et les vannes de contrôle prévues. Comme on le voit, des vannes AV11, AV 12, AV 13, AV 14 sont installées en sortie sur les tuyaux collecteurs. Ces vannes sont de type classique. Des vannes sont également disposées sur le tuyau d'alimentation en eau brute (vanne notée AV 1) et sur la sortie d'eau traitée produite (vanne notée AV3), ladite eau produite étant stockée dans une bâche à eau traitée 30 (de type classique). Des vannes sont également installées d'une part pour autoriser la vidange de la chambre de filtration 2 vers l'égout (vanne AV2), d'autre part pour permettre l'évacuation de l'eau du collecteur 17 vers l'égout (vanne AV4).
En sortie de la bâche d'eau produite 30, l'eau pure est soit retournée vers la distribution aux utilisateurs par une conduite 31, soit réinjectée dans le collecteur 17 par une ligne de rétrolavage 32, sur laquelle est montée une pompe de ré injection 33 et une vanne de ré injection AV5. Des postes d'injection de Chlore 34 et d'injection de soude 35 sont également reliés à cette ligne de rétrolavage 32. Ces éléments sont de type courant, et connu en soi.
Les vannes précédentes sont de type automatique, et sont donc pilotables soit de façon télécommandée, soit de façon asservie, par logique de commande.
Une vanne 39 dite de "vidange manuelle" est reliée au bas du bassin 2 de filtration. Elle est destinée à drainer les eaux du bassin si l'on souhaite notamment le vidanger pour le nettoyer. Cette opération exceptionnelle (pratiquement de façon annuelle) de maintenance du bassin ne justifie pas une vanne automatique.

Les différentes phases du procédé sont celles classiquement rencontrées dans les procédés de type ultra ou micro filtration adaptés au traitement d'eau, à savoir:
filtration,
rétrolavages réguliers (intervalle de l'ordre de quelques heures) avec ou sans addition d'agents chimiques dans l'eau de rétrolavage (oxydants, base etc.)
lavages dits "chimiques" à forte dose de produit chimique, ces lavages longs étant réalisés avec un intervalle de l'ordre de quelques semaines.

Dans l'étape de filtration, l'eau brute, à filtrer, est introduite par le fond du bassin 2 de filtration (au voisinage du plancher bas 4), et atteint au bout d'un certain temps de remplissage le niveau 36, dit "niveau de production", et situé dans l'exemple présenté ici à environ 5.3 m au dessus du plancher bas 4. L'eau brute remplit les modules de filtration 12 par chacun des quarante tuyaux d'alimentation 14 situés au dessus des modules. Sous l'effet de la pression existante à la surface des membranes (de l'ordre de 0,4 à 0,5 bar) l'ultrafiltration se produit, l'eau traversant les parois des fibres 20. On note que l'ultrafiltration se produit à pression constante, fonction de la hauteur d'eau présente dans le bassin 2 de filtration. L'eau filtrée ("perméat") s'écoule par les tuyaux collecteurs 17 ("nourrices") situés en fond de bassin, vers la production d'eau. L'écoulement de l'eau filtrée est régi par simple gravité.
Durant cette phase, les vannes des tuyaux collecteurs AV11, AV12, AV13, AV14, ainsi que les vannes d'alimentation en eau brute AV1 et de sortie d'eau produite AV3 sont ouvertes, alors que les vannes de vidange AV2 de la chambre de filtration 2, d'évacuation AV4 de l'eau du collecteur 17 vers l'égout, et de ré injection AV5 d'eau produite dans le collecteur sont fermées.

Dans l'étape de rétrolavage, le niveau d'eau dans le bassin 2 de filtration est descendu jusqu'au niveau 37 dit "niveau d'eau en rétrolavage", et situé au niveau des goulottes 10. Pour cela, on peut procéder de deux façons :
1/ soit on ferme la vanne d'alimentation en eau brute AV1, et on maintient la filtration dont la pression diminue progressivement avec le niveau d'eau dans le bassin,
2/ soit on ferme les vannes d'alimentation en eau brute AV1 et de production d'eau traitée AV3 vers la bâche d'eau traitée 30, et on ouvre la vanne AV2 de vidange par les goulottes 10 de la chambre de filtration vers l'égout.
   Lorsque le niveau d'eau en rétrolavage 37 est atteint, on procède au rétrolavage de chacun des groupes 11de deux lignes de dix modules 12, ligne par ligne. Pour une ligne donnée, on ferme les vannes d'alimentation en eau brute AV1 et de production d'eau traitée AV3 vers la bâche d'eau traitée 30, ainsi que les vannes des tuyaux collecteurs ne correspondant pas à la ligne traitée (AV12, AV13, AV14 par exemple si la ligne traitée correspond à la vanne AV11) et on ouvre la vanne AV2 de vidange du bassin 2 de filtration vers l'égout. Puis on ouvre la vanne de ré injection AV5, et la pompe de ré injection 33 est mise en route (pression de rétrolavage environ 1.5 bar). On peut injecter du Chlore via le poste d'injection 34, selon les conditions de fonctionnement précédentes de l'installation, de façon connue de l'homme de l'art.
   Dans cette disposition des vannes, l'eau produite retraverse les membranes 12, et l'eau de rétrolavage ainsi produite, sale et éventuellement chlorée, remonte par les tuyaux d'alimentation 14 et se déverse dans les goulottes 10 et est ainsi dirigée vers l'égout via la vanne de vidange AV2 ouverte.
   En fin de rétrolavage, on, arrête l'addition de Chlore pour rincer les modules 12 et les tuyaux d'alimentation 14 avec de l'eau produite propre.
   Chaque ligne de modules 12 est ainsi rétro lavée toutes les quelques heures de la même façon.
   A la fin du rétrolavage, on revient en phase de filtration (production) en refermant les vannes de ré injection AV5, et de vidange AV2 du bassin 2 de filtration, en réouvrant la vanne de production d'eau traitée AV3 et toutes les vannes des collecteurs 17 des groupes 11 de modules 12 ,et on ramène, par ouverture de la vanne d'alimentation en eau brute AV1, le niveau d'eau brute dans le bassin 2 de filtration au niveau de production 36.

Lorsque les rétrolavages ne sont pas suffisants pour restaurer la perméabilité des membranes 12, et en pratique toutes les quelques semaines, on procède à un lavage "chimique", qui consiste à remplir les modules 12 d'une solution de nettoyage (par exemple une solution de soude), à laisser la solution agir et à ensuite rincer en rétrolavage les modules 12 comme indiqué plus haut.
On procède de la manière suivante : le niveau d'eau dans le bassin 2 de filtration est descendu au niveau d'eau en rétrolavage 37 par un des deux procédés décrits plus hautes dans l'étape préliminaire du rétrolavage.
Les vannes d'alimentation en eau brute AV1, de production d'eau traitée AV3, de vidange du collecteur AV4, de ré injection AV5, sont fermées, alors que les vannes des tuyaux collecteurs (AV11, AV12, AV13, AV14) et la vanne de vidange AV2 sont ouvertes et la pompe de ré injection 33 est mise en route.
L'eau produite est alors réinjectée à faible débit grâce à un limiteur de débit 38, installé en parallèle avec la pompe de ré injection 33. Le poste d'injection de soude 35 est mis en marche. L'excédent d'eau amené dans les modules 12 est évacué par les tuyaux d'alimentation 14 vers les goulottes 12 et l'égout via la vanne de vidange AV2. Lorsque les modules 12 sont déterminés pleins de solution de nettoyage, la pompe de ré injection 33 est arrêtée. Un trempage de trente minutes environ est réalisé pour les membranes 12. L'ouverture de la vanne de vidange du collecteur AV4 permet alors de vidanger la solution de nettoyage concentrée vers l'égout. Cette vanne de vidange AV4 est alors refermée, et on réaliser le rinçage de chacune des lignes en rétrolavage non chloré, conformément à la description précédente, la vanne de vidange AV2 étant ouverte.
Il est clair que l'on peut utiliser plusieurs solutions de nettoyage successivement pour laver les modules. Lorsque toutes les lignes ont été rincées, on revient en mode filtration, de la façon indiquée à la fin de la phase de rétrolavage.

Il est à noter par ailleurs que la vanne de vidange du collecteur AV4 est utilisée pour rincer en production les modules 12 de la solution de stockage généralement utilisée lors de la mise en service des modules 12.

Il est possible de réaliser groupe par groupe un test d'intégrité à l'air. Par exemple, pour un groupe donné, on injecte sur le collecteur du groupe de l'air comprimé (par un dispositif non représenté mais connu de l'homme de l'art), la vanne d'eau produite du collecteur étant fermée, et on vidange ainsi par filtration inverse ("perméation") l'eau contenue côté perméat. On teste ensuite le groupe en arrêtant l'alimentation d'air comprimé et en mesurant la chute de pression. En l'absence de fibre cassées, la pression d'air reste constante, l'air ne pouvant passer à travers la paroi de la membrane d'ultrafiltration. Dans le cas contraire, la pression d'air va diminuer de façon mesurable, ce qui permet aisément de prouver la présence de fibres cassées dans le groupe.
Pour déterminer l'origine de la fuite sur un module particulier, une fois le groupe défaillante identifiée, on doit vidanger le bassin, déconnecter le tuyau d'alimentation 14 au dessus du module 12 à tester, le remplacer par un bouchon doté d'une alimentation en air comprimé et on teste le module en pressurisant le côté extérieur des fibres 20. Les modules défaillants doivent ensuite être démontés pour réparation.
Il est à noter que la plupart des installations de potabilisation d'eau existantes (du type à lit de sable) disposent déjà d'un compresseur, car de l'air comprimé est le plus souvent disponible sur les sites de traitement, et ce compresseur existant est alors réutilisé dans la nouvelle installation, ce qui contribue à une économie de moyens nouveaux à installer.

On comprend que par rapport à une installation d'ultrafiltration de type classique, la présente installation s'intègre facilement en réutilisant les prétraitements (comme l'adoucissement à la chaux), et les post-traitements à venir (comme la nanofiltration).
On réutilise ici un génie civil existant avec peu de modifications, le génie civil nécessaire est bon marché et le châssis du dispositif est réduit à un dispositif très simple. La pompe de gavage (injection d'eau brute) est réutilisée.
Le procédé est simple car travaillant à pression constante, et à débit variable, avec un automatisme lié à la hauteur d'eau dans le bassin, et donc très simple et demandant peu d'instrumentation. On a ici un avantage majeur par rapport aux dispositifs connus dans le domaine, qui au contraire travaillent en pression variable et débit constant, ce qui entraîne la mise en place d'un système de régulation de pression, complexe et coûteux.
Le fonctionnement à basse pression favorise un fonctionnement stable des membranes et minimise les lavages chimiques et le vieillissement mécanique des membranes, donc le risque de casse, avec les temps de maintenance associés.

Du fait de la pression de fonctionnement plus faible que dans les dispositifs classiques, on utilise pour une production égale un plus grande surface de membranes (avec une pression de fonctionnement de 0,4 à 0,5 bar, on a ici un flux de filtration valant sensiblement 36 l/hm2), mais il s'agit ici de membranes de type fibre à peau externe, donc bon marché (le prix des modules de membranes 12 étant en fait proportionnel à son volume et non à la surface des membranes).

On peut alors montrer que par rapport à des modules de membranes de type classique, l'économie de volume de modules nécessaires à production égale est très significative, en terme de coût des pièces et donc de fonctionnement de l'installation.

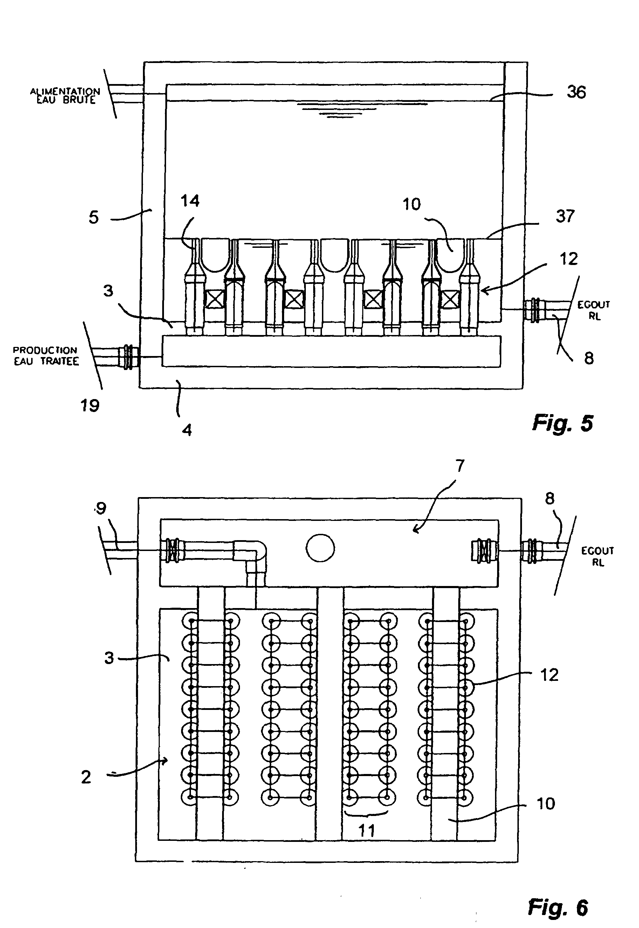

Une variante avantageuse est illustrée par les figures 5 à 7. Cette variante comporte deux modifications significatives par rapport au dispositif illustré par les figures 1 et 2.
D'une part, le plancher intermédiaire 3 du lit de sable originel n'est pas supprimé ici, mais modifié en ce qu'il est doté d'orifices adaptés à laisser passer les têtes des modules de filtration 12, ces modules étant disposés sur des joints d'étanchéité.
On a alors une disposition justifiant bien le terme de "plancher filtrant". Cette disposition, dont le principe de fonctionnement est sensiblement identique à la description précédente, présente un avantage de réutiliser encore plus le génie civil existant, et de réduire le volume de conduits nouveaux à mettre en place (suppression des support mécanique 27 et des tuyaux collecteurs 17 entre autres).
D'autre part, les goulottes 10 d'évacuation des boues de lavage des membranes, sont ici situées juste au dessus du haut des modules de filtration 12. Ces goulottes 10 sont reliées à l'égout par l'intermédiaire du point de connexion 8, comme précédemment.
Comme on le voit sur la figure 6, sur le plancher intermédiaire 3 du bassin 2 de filtration sont disposés quatre groupes 11 comprenant chacun vingt modules de filtration 12, de façon analogue à la disposition de la figure 2.

Les modules de membranes 12 sont alimentés en eau brute par leur partie haute comme précédemment. L'eau issue de la filtration est évacuée par la partie basse des membranes, c'est à dire directement sous le plancher intermédiaire 3.
Les eaux filtrées sont collectées par un dispositif non détaillé, mais de nature classique dans le domaine.

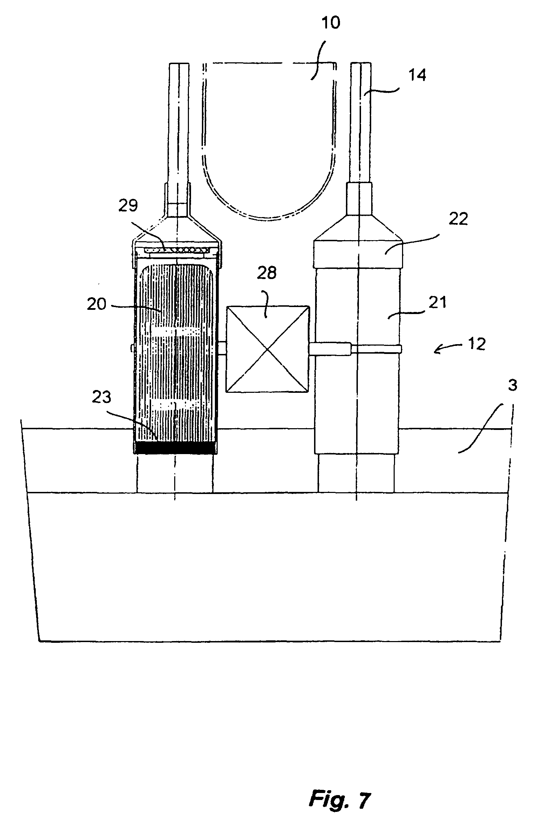

La figure 7 montre plus en détails la disposition des modules de membranes 12 sur le plancher intermédiaire 3.
Dans cette variante de mise en oeuvre, le fonctionnement est généralement identique à ce qui a été exposé plus haut. Cependant, pour ce qui est du rétrolavage, le niveau d'eau dans le bassin 2 de filtration doit être abaissé jusqu'au niveau 37 dit "niveau d'eau en rétrolavage", et situé au niveau des goulottes 10, qui est donc nettement plus bas que dans la mise en oeuvre exposée plus haut.

Dans une autre variante d'utilisation, il est envisageable de remplacer l'eau brute par des eaux usées, qui contiennent un taux de matières en suspension nettement plus grand que l'eau brute. Dans cette variante, il est nécessaire de secouer le faisceau de membranes pour éviter le colmatage des membranes. Un flux de bulles d'air fournit une solution à ce problème.

Dans encore une autre variante, de l'air est injecté au niveau bas des membranes pour secouer l'eau usée, pendant la phase de filtration, selon une technique connue de l'homme de l'art.

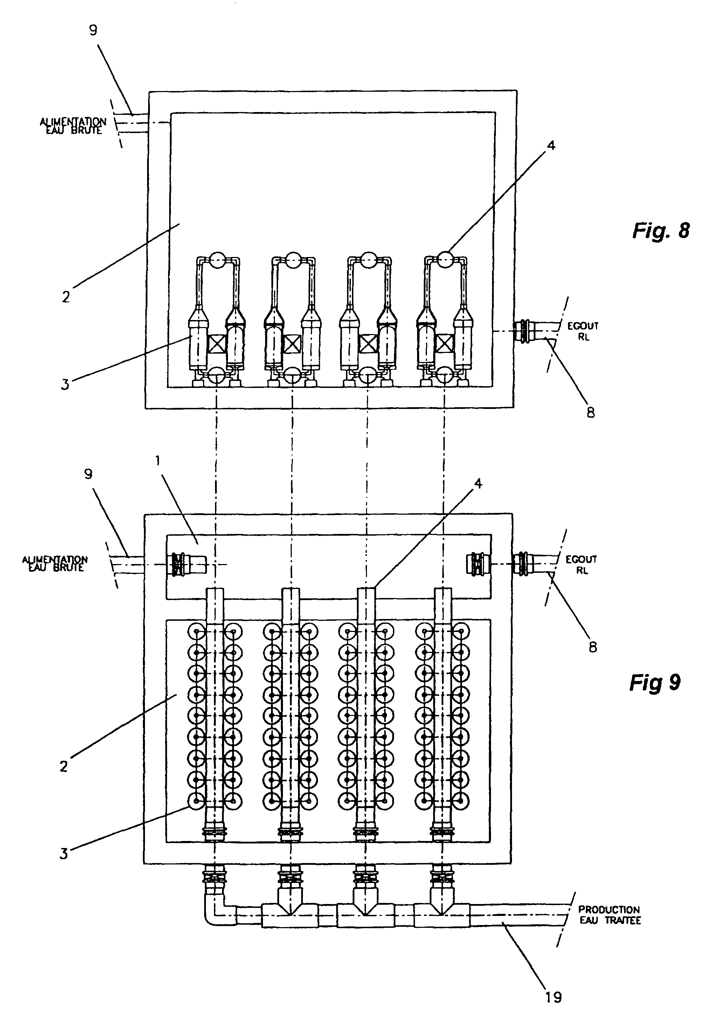

Dans une variante illustrée par les figures 8 et 9, le bassin 2 est divisé en deux compartiments dont un au moins est maintenu sec. Ce compartiment sec comprend les modules à membranes immergées. L'alimentation en eau brute des modules est faite gravitairement, à l'aide des tuyauteries fermées situées au dessus des modules. Ces tuyauteries sont aussi utilisées pour canaliser l'eau de rétrolavage à l'extérieur des modules.
Dans l'exemple de réalisation représenté sur les figures 8 et 9, le bassin est divisé en deux compartiments dont un est rempli d'eau brute et alimente gravitairement l'ensemble des modules situés dans l'autre compartiment sec, par l'intermédiaire de tuyauteries situées au dessus des modules. Cette disposition offre clairement l'avantage de permettre une maintenance nettement plus facile des modules.
Il est donc clair que généralement selon la présente invention, les membranes sont immergées dans un volume d'eau dont la hauteur d'eau permet la filtration, ce volume pouvant être un bassin plein d'eau dans lesquelles les membranes sont immergées, ou simplement un volume formé d'un module de membranes, relié par des tuyauteries à une hauteur d'eau adaptée à créer une pression suffisante à la filtration par les membranes.

Dans une variante de disposition des fibres creuses, celles-ci sont empotées en une seule de leurs deux extrémités, l'autre extrémité étant simplement obturée. Dans ce cas, la seule sortie de filtrat est bien encore disposée en bas de module.

La portée de la présente invention ne se limite pas aux détails des formes de réalisation ci-dessus considérés à titre d'exemple, mais s'étend au contraire aux modifications à la portée de l'homme de l'art.

## Revendications

1. Installation de filtration d'eau par membranes, comportant une entrée d'eau brute (9), une connexion à un égout (8), un moyen de sortie d'eau produite (31), les membranes (20) étant immergées dans un volume de filtration empli d'eau à filtrer, dont la hauteur d'eau au dessus desdites membranes est adaptée à créer une pression différentielle suffisante à provoquer la filtration à travers ces membranes, dans lequel les membranes (20) sont de type fibre à peau externe sensiblement disposée en "U", dont les deux extrémités ouvertes sont situées en bas, rempotage étant réalisé au point bas desdites membranes (20),
**caractérisée en ce que** les membranes (20) sont disposées dans des conteneurs cylindriques (21) formant ainsi des modules, chaque module (12) comportant une tuyauterie (14) d'alimentation en eau brute reliée en partie haute du module.

2. Installation selon la revendication 1, **caractérisée en ce que** l'empotage des deux extrémités d'une même membrane est réalisé en un même point.

3. Installation selon l'une des revendications 1 ou 2, **caractérisée en ce que** la différence de pression maximale créée dans le volume de filtration est de 0.6 bar environ.

4. Installation selon la revendication 3, **caractérisée en ce que** la différence de pression nominale dans le volume de filtration est de 0.4 à 0.5 bar.

5. Installation selon la revendication 4, **caractérisée en ce que** les membranes (20) sont disposées en modules (12) de membranes.

6. Installation selon la revendication 5, **caractérisée en ce que** la surface de membrane de chaque module (12) est sensiblement de 125 m2.

7. Installation selon la revendication 6, **caractérisée en ce que** les modules (12) sont des conteneurs cylindriques (21) possédant sensiblement un diamètre de 30 cm pour une longueur de 80 cm.

8. Installation selon l'une quelconque des revendications 5 à 7, **caractérisée en ce que** les modules (12) sont disposés sensiblement au fond d'un bassin (2).

9. Installation selon la revendication 8, **caractérisée en ce que** les modules (12) sont réunis en groupes (11) autour de moyens (17) de collection de l'eau issue de la filtration, auxquels ils sont connectés.

10. Installation selon la revendication 9, **caractérisée en ce que** chaque groupe (11) comprend deux lignes sensiblement parallèles de 10 modules (12).

11. Installation selon l'une quelconque des revendications 5 à 10, **caractérisée en ce que** les modules (12) sont disposés sensiblement verticalement.

12. Installation selon la revendication 11, **caractérisée en ce que** les moyens d'alimentation en eau brute des modules (12) sont des tuyaux d'alimentation (14) dont l'extrémité libre (16) est située sensiblement à mi-hauteur du bassin (2) de filtration.

13. Installation selon la revendication 12, **caractérisée en ce que** les tuyaux d'alimentation (14) sont à leur extrémité libre (16) orientés vers le bas et **en ce que** l'installation comporte des goulottes (10) d'évacuation, situées sous les extrémités (16) de ces tuyaux d'alimentation (14), lesdites goulottes (10) étant reliées à une vanne de vidange (AV2) débouchant sur l'égout (8).

14. Installation selon la revendication 9, **caractérisée en ce que** chaque moyen collecteur (17) comporte une vanne (AV 11, AV12, AV13, AV14) séparant ce moyen collecteur (17) d'un moyen de transfert (19) de l'eau produite vers une vanne de sortie d'eau produite (AV3) et un moyen de stockage (30).

15. Installation selon la revendication 14, **caractérisée en ce qu'**elle comporte une ligne (32) de ré-injection d'eau produite vers le moyen de transfert (19) en amont de la vanne de sortie d'eau produite (AV3), et une pompe de ré-injection (33) située sur cette ligne (32).

16. Installation selon la revendication 15, **caractérisée en ce qu'**elle comporte un poste d'injection de chlore (34) et un poste d'injection de soude (35) débouchant sur la ligne de ré-injection (32).

17. Installation de filtration d'eau par membranes selon la revendication 5, **caractérisé en ce que** les modules (12) à membranes sont disposés en bas d'un compartiment sec, et **en ce que** les modules sont alimentés par gravité en eau à filtrer par des tuyauteries fermées, ces tuyauteries servant aussi à canaliser l'eau de rétrolavage.

18. Procédé de filtration d'eau par membranes immergées, de type membranes d'ultrafiltration, la filtration à travers les membranes étant réalisée en utilisant comme source de pression différentielle la hauteur d'eau présente dans le bassin (2) dans lequel les membranes (20) sont immergées et sont de type fibre à peau externe, à empotage au point bas desdites membranes (20),
**caractérisé en ce que** les membranes (20) sont disposées dans des conteneurs cylindriques (21) formant ainsi des modules, chaque module (12) comportant une tuyauterie (14) d'alimentation en eau brute reliée en partie haute du module.

19. Procédé de réhabilitation d'une unité existante d'épuration d'eau de type dit à bassin à sable, comprenant un bassin (2) doté d'un plancher bas (4), d'un plancher intermédiaire sur lequel repose le lit de sable, d'une amenée d'eau brute (9), **caractérisé en ce qu'**il comprend des étapes de suppression du lit de sable, de destruction du plancher intermédiaire, d'installation d'au moins une goulotte (10) intermédiaire d'évacuation des boues de lavage située sensiblement à mi-hauteur du bassin (2) de filtration et fermée par une vanne (AV2) donnant sur l'égout (8), d'installation sur le plancher bas (4) d'une série de modules (12) d'ultrafiltration à membrane, les membranes (20) étant des membranes de type fibre à peau externe empotées en leur point bas, disposées dans des conteneurs (21) et la pression de fonctionnement de ces membranes étant créée par la hauteur d'eau brute stockée dans le bassin (2) au dessus de ces membranes.

20. Procédé de réhabilitation selon la revendication 19, **caractérisé en ce qu'**il comporte une phase de test d'intégrité des membranes (20) d'un groupe (11), comprenant les étapes suivantes :
- fermeture de la vanne d'eau produite d'un collecteur (18),
- injection d'air comprimé sur le collecteur du groupe (11),
- vidange par filtration inverse ("perméation") de l'eau contenue côté perméat,
- arrêt de l'alimentation d'air comprimé,
- mesure de la chute de pression.

## Patentansprüche

1. Anlage zur Filtration von Wasser durch Membranen, umfassend einen Rohwassereintritt (9), einen Anschluß an einen Ablauf (8), ein Austrittsmittel (31) für erzeugtes Wasser, wobei die Membranen (20) in ein Filtrationsvolumen eingetaucht sind, das mit zu filtrierendem Wasser gefüllt ist, dessen Wasserstand über den Membranen dafür ausgelegt ist, einen Differenzdruck zu erzeugen, der ausreicht, um die Filtration durch diese Membranen hindurch zu bewirken, und in dem die Membranen (20) vom Typ Außenhautfaser sind, die im wesentlichen in einem "U" angeordnet ist, deren beide offenen Enden unten gelegen sind, wobei die Vergießung am unteren Punkt dieser Membranen (20) durchgeführt ist, **dadurch gekennzeichnet, daß** die Membranen (20) in zylindrischen Behältern (21) angordnet sind, die auf diese Weise Module bilden, wobei jedes Modul (12) eine Rohrleitung (14) zur Versorgung mit Rohwasser besitzt, die im oberen Teil des Moduls angeschlossen ist.

2. Anlage nach Anspruch 1, **dadurch gekennzeichnet, daß** die Vergießung der beiden Enden ein und derselben Membran an einem gemeinsamen Punkt durchgeführt ist.

3. Anlage nach einem der Ansprüche 1 oder 2, **dadurch gekennzeichnet, daß** die maximale in dem Filtrationsvolumen erzeugte Druckdifferenz etwa 0,6 bar beträgt.

4. Anlage nach Anspruch 3, **dadurch gekennzeichnet, daß** die Nenndruckdifferenz in dem Filtrationsvolumen 0,4 bis 0,5 bar beträgt.

5. Anlage nach Anspruch 4, **dadurch gekennzeichnet, daß** die Membranen (20) in Membranmodulen (12) angeordnet sind.

6. Anlage nach Anspruch 5, **dadurch gekennzeichnet, daß** die Membranoberfläche jedes Moduls (12) im wesenlichen 125 m² beträgt.

7. Anlage nach Anspruch 6, **dadurch gekennzeichnet, daß** die Module (12) zylindrische Behälter (21) sind, die im wesentlichen einen Durchmesser von 30 cm bei einer Länge von 80 cm besitzt.

8. Anlage nach einem der Ansprüche 5 bis 7, **dadurch gekennzeichnet, daß** die Module (12) im wesentlichen am Boden eines Beckens (2) angeordnet sind.

9. Anlage nach Anspruch 8, **dadurch gekennzeichnet, daß** die Module (12) in Gruppen (11) um Mittel (17) herum zum Sammeln des von der Filtration kommenden Wassers vereinigt sind, an die sie angeschlossen sind.

10. Anlage nach Anspruch 9, **dadurch gekennzeichnet, daß** jede Gruppe (11) zwei im wesentlichen parallele Reihen von 10 Modulen (12) umfasst.

11. Anlage nach einem der Ansprüche 5 bis 10, **dadurch gekennzeichnet, daß** die Module (12) im wesentlichen vertikal angeordnet sind.

12. Anlage nach Anspruch 11, **dadurch gekennzeichnet, daß** die Mittel zur Versorgung der Module (12) mit Rohwasser Versorgungsrohre (14) sind, deren freies Ende (16) im wesentlichen auf halber Höhe des Filtrationsbeckens (2) gelegen ist.

13. Anlage nach Anspruch 12, **dadurch gekennzeichnet, daß** die Versorgungsrohre (14) an ihrem freien Ende (16) nach unten gerichtet sind und daß die Anlage Abfuhrrinnen (10) aufweist, die unter den Enden (16) dieser Versorgungsrohre (14) gelegen sind, wobei diese Rinnen (10) mit einem Entleerungsventil (AV2) verbunden sind, das in den Ablauf (8) mündet.

14. Anlage nach Anspruch 9, **dadurch gekennzeichnet, daß** jedes Sammelmittel (17) ein Ventil (AV11,AV12, AV13, AV14) aufweist, das dieses Sammelmittel (17) von einem Mittel (19) zur Übertragung von erzeugtem Wasser zu einem Austrittsventil (AV3) für erzeugtes Wasser und einem Speichermittel (30) trennt.

15. Anlage nach Anspruch 14, **dadurch gekennzeichnet, daß** sie eine Leitung (32) zur Wiedereinleitung von erzeugtem Wasser zu den Übertragungsmitteln (19) stromauf des Austrittsventils (AV3) für erzeugtes Wasser und eine in dieser Leitung (32) gelegene Wiedereinleitungspumpe (33) aufweist.

16. Anlage nach Anspruch 15, **dadurch gekennzeichnet, daß** sie eine Chloreinleitungseinrichtung (34) und eine Sodaeinleitungseinrichtung (35) aufweist, die in diese Leitung (32) zur Wiedereinleitung münden.

17. Anlage zur Filtration von Wasser durch Membranen nach Anspruch 5, **dadurch gekennzeichnet, daß** die Membranmodule (12) im unteren Teil eines trockenen Abteils angeordnet sind und daß die Module durch Schwerkraft mit zu filtrierendem Wasser durch geschlossene Rohrleitungen versorgt werden, wobei diese Rohrleitungen auch zur Beförderung des Rückwaschwassers dienen.

18. Verfahren zur Filtration von Wasser durch eingetauchte Membranen vom Typ Ultrafiltrationsmembranen, wobei die Filtration durch die Membranen hindurch durchgeführt wird, indem als Differenzdruckquelle die im Becken (2) bestehende Höhe des Wassers verwendet wird, in das die Membranen (20) eingetaucht sind und vom Typ Außenhautfaser mit Vergießung am unteren Punkt dieser Membranen (20) sind,
**dadurch gekennzeichnet, daß** die Membranen (20) in zylindrischen Behältern (21) angeordnet sind, die auf diese Weise Module bilden, wobei jedes Modul (12) eine Rohrleitung (14) zur Versorgung mit Rohwasser aufweist, die im oberen Teil des Moduls angeschlossen ist.

19. Verfahren zur Sanierung einer bestehenden Wasserreinigungseinheit vom Typ mit Sandbecken, umfassend ein Becken (2), das mit einem unteren Boden (4), mit einem Zwischenboden, auf dem das Sandbett ruht, einer Rohwasserzuführung (9) versehen ist, **dadurch gekennzeichnet, daß** es die Schritte der Beseitigung des Sandbetts, der Zerstörung des Zwischenbodens, der Verlegung mindestens einer Zwischenrinne (10) zur Abfuhr des Waschschlamms, die im wesentlichen auf halber Höhe des Filtrationsbeckens (2) gelegen ist und durch ein zum Ablauf (8) führendes Ventil (AV2) geschlossen ist, der Verlegung einer Reihe von Ultrafiltrationsmembranmodulen (12) auf dem unteren Boden (4) umfaßt, wobei die Membranen (20) Membranen vom Typ Außenhautfaser mit Vergießung an ihrem unteren Punkt sind, die in Behältern (21) angeordnet sind, und der Betriebsdruck dieser Membranen durch die Höhe des in dem Becken (2) gespeicherten Rohwassers über diesen Membranen erzeugt wird.

20. Sanierungsverfahren nach Anspruch 19, **dadurch gekennzeichnet, daß** es eine Phase des Tests der Unversehrtheit der Membranen (20) einer Gruppe (11) umfaßt, die die folgenden Schritte umfaßt:
- Schließung des Ventils für erzeugtes Wasser eines Kollektors (18),
- Einleitung von Druckluft auf den Kollektor der Gruppe (11),
- Entleerung durch Umkehrfiltration ("Permeation") des permeatseitig enthaltenen Wassers,
- Unterbrechung der Druckluftzufuhr,
- Messung des Druckabfalls.

## Claims

1. Installation for the membrane filtration of water, comprising an untreated water inlet (9), a connection to a drain (8) and a means of discharging the treated water (31), the membranes (20) being submerged in a filtration space filled with water to be filtered, in which the water height above the said membranes is adapted to create a differential pressure sufficient to cause filtration through these membranes, in which the membranes (20) are of the fibre type with an external skin substantially disposed in a "U", the two open ends of which are situated at the bottom, the potting being carried out at the low point of the said membranes (20),
**characterised in that** the membranes (20) are disposed in cylindrical containers (21) thus forming modules, each module (12) comprising a pipe (14) for supplying untreated water connected at the top part of the module.

2. Installation according to Claim 1, **characterised in that** the potting of the two ends of the same membrane is carried out at the same point.

3. Installation according to one of Claims 1 or 2, **characterised in that** the maximum pressure difference created in the filtration space is approximately 0.6 bar.

4. Installation according to Claim 3, **characterised in that** the nominal pressure difference in the filtration space is 0.4 to 0.5 bar.

5. Installation according to Claim 4, **characterised in that** the membranes (20) are disposed in modules (12) of membranes.

6. Installation according to Claim 5, **characterised in that** the membrane surface of each module (12) is substantially 125 m².

7. Installation according to Claim 6, **characterised in that** the modules (12) are cylindrical containers (21) having substantially a diameter of 30 cm with a length of 80 cm.

8. Installation according to any one of Claims 5 to 7, **characterised in that** the modules (12) are disposed substantially at the bottom of a basin (2).

9. Installation according to Claim 8, **characterised in that** the modules (12) are joined in groups (11) around means (17) of collecting the water issuing from the filtration, to which they are connected.

10. Installation according to Claim 9, **characterised in that** each group (11) comprises two substantially parallel lines of ten modules (12).

11. Installation according to any one of Claims 5 to 10, **characterised in that** the modules (12) are disposed substantially vertically.

12. Installation according to Claim 11, **characterised in that** the means of supplying untreated water to the modules (12) are supply pipes (14) whose free end (16) is situated substantially half-way up the filtration basin (2).

13. Installation according to Claim 12, **characterised in that** the supply pipes (14) are, at their free end (16), oriented downwards and **in that** the installation has discharge spouts (10) situated under the ends (16) of these supply pipes (14), the said spouts (10) being connected to a drainage valve (AV2) opening out onto the drain (8).

14. Installation according to Claim 9, **characterised in that** each collecting means (17) has a valve (AV11, AV12, AV13, AV14) separating this collecting means (17) from a means (19) of transferring treated water to an outlet valve for treated water (AV3) and a storage means (30).

15. Installation according to Claim 14, **characterised in that** it has a line (32) for reinjecting treated water to the transfer means (19) upstream of the treated water outlet valve (AV3), and a reinjection pump (33) situated on this line (32).

16. Installation according to Claim 15, **characterised in that** it comprises a chlorine injection station (34) and a soda injection station (35) opening out onto the reinjection line (32).

17. Water membrane filtration installation according to Claim 5, **characterised in that** the membrane modules (12) are disposed at the bottom of a dry compartment, and **in that** the modules are fed by gravity with water to be filtered through closed pipes, these pipes also serving to channel the back-washing water.

18. Method for water filtration by means of immersed membranes, of the ultrafiltration membrane type, the filtration through the membranes being carried out using, as a differential pressure source, the height of water present in the basin (2) in which the membranes (2) are immersed and are of the fibre type with external skin, with potting at the low point of the said membranes (20),
**characterised in that** the membranes (20) are disposed in cylindrical containers (21) thus forming modules, each module (12) having an untreated water supply pipe (14) connected at the top of the module.

19. Method of rehabilitating an existing water purification unit of the so-called sand basin type, comprising a basin (2) provided with a low floor (4), an intermediate floor on which the sand bed rests, and an untreated water feed (9), **characterised in that** it comprises steps of eliminating the sand bed, destroying the intermediate floor, installing at least one intermediate spout (10) for discharging the washing sludge situated substantially half-way up the filtration basin (2) and closed by a valve (AV2) giving onto the drain (8), installing on the low floor (4) a series of membrane ultrafiltration modules (12), the membranes (20) being membranes of the fibre type with an external skin potted at their low point, disposed in containers (21), and the operating pressure of these membranes being created by the height of untreated water stored in the basin (2) above these membranes.

20. Rehabilitation method according to Claim 19, **characterised in that** it includes a phase of testing the integrity of the membranes (20) in a group (11), comprising the following steps:
- closing the treated water valve of a receiver (18),
- injecting compressed air onto the receiver of the group (11),
- drainage, by reverse filtration ("permeation") of the water contained on the permeate side,
- stopping the supply of compressed air,
- measuring the pressure drop.
